# EUROPÄISCHE PATENTSCHRIFT

(11) **EP 0 447 796 B1**
(45) Veröffentlichungstag und Bekanntmachung des Hinweises auf die Patenterteilung: **28.09.1994**
(21) Anmeldenummer: 91102071.7
(22) Anmeldetag: 14.02.1991
(51) Int. Cl.: B60T 8/32

(54) **Hydraulische Zweikreisbremsanlage**
Hydraulic circuit brake system
Système à freinage hydraulique à double circuit

(30) Priorität: 16.10.1990 DE 4032784; 23.03.1990 DE 4009302
(43) Veröffentlichungstag der Anmeldung: 25.09.1991
(73) Patentinhaber: ROBERT BOSCH GMBH, 70442 Stuttgart (DE)
(72) Erfinder: Bernhardt, Wolfgang, Ing., W-7015 Korntal (DE); Kirstein, Lothar, Dipl.-Ing., W-7257 Ditzingen (DE); Schmidt, Günther, Dipl.-Ing.,Dr., W-7146 Tamm-Hohenstange (DE); Wetzel, Gerhard, Dipl.-Ing., W-7015 Korntal 1 (DE); Holzmann, Roland, Dipl.-Ing., W-7000 Stuttgart 1 (DE)

(56) Entgegenhaltungen:
- DE-C- 3 900 852
- FR-A- 2 636 575
- GB-A- 2 119 883
- US-A- 4 874 208

## Beschreibung

### Stand der Technik

Die Erfindung geht aus von einer hydraulischen Zweikreisbremsanlage mit Blockierschutzsystem (ABS) und Antriebsschlupfregelung (ASR) für Kraftfahrzeuge, insbesondere Personenkraftwagen, der im Oberbegriff des Anspruchs 1 definierten Gattung.

Bei einer bekannten Zweikreisbremsanlage dieser Art (DE 38 16 073 A1) weist die Rückförderpumpe ein als Vorladepumpe wirkendes drittes Pumpenelement auf, das zwischen dem als hydraulisch gesteuerten 2/2-Wegeventil ausgebildeten Ladeventil und dem dem Bremskreis der Antriebsräder zugeordneten Pumpenelement eingeschaltet ist. Der Steuereingang des Ladeventils ist an einem Bremskreisausgang des Hauptbremszylinders angeschlossen. Bei Steuerdruck am Steuereingang wird das Ladeventil in seine Sperrstellung umgeschaltet. Bei Antriebsschlupfregelung wird das Umschaltventil umgeschaltet, das nunmehr die Verbindung des Bremskreises zum Bremskreisausgang des Hauptbremszylinders auftrennt und den Bremskreis über das Druckbegrenzungsventil an den Bremskreisausgang des Hauptbremszylinders legt. Das dritte Pumpenelement speist nunmehr das nachgeordnete Pumpenelement der Rückförderpumpe, das einen Bremshochdruck erzeugt, der am Eingang der Steuerventile ansteht. Dieser Bremsdruck wird über die als 3/3-Wegemagnetventile ausgebildeten Steuerventile in die Radbremszylinder der Antriebsräder eingesteuert, und diese werden dadurch abgebremst. Dreht nur ein Antriebsrad durch, so wird das Steuerventil, das dem Auslaßkanal für den Radbremszylinder des nicht schlüpfenden Antriebsrades zugeordnet ist, in seine Mittelstellung überführt, so daß kein Bremsdruck in dem Radbremszylinder des nicht schlüpfenden Antriebsrades aufgebaut werden kann.

Durch die Druckschrift DE-C-3 900 852 ist eine mit einem Antiblockiersystem ausgerüstete hydraulische Zweikreisbremsanlage bekannt, deren einer Bremskreis der Vorderradachse und deren Radbremsen und deren anderer Bremskreis der Hinterradachse und deren Radbremsen für antreibbare Räder eines Kraftfahrzeugs zugeordnet ist. Der Bremskreis für die antreibbaren Hinterräder ist weiter gebildet zur Antriebsschlupfregelung durch automatisches Versorgen der Hinterradbremsen mit Bremsdruck. Hierfür entnimmt eine zum Antiblockiersytem gehörende Rückförderpumpe, die durch Einbau einer Pumpenfeder selstansaugend ausgebildet wird, aus einem Bremsflüssigkeitsbehälter oberhalb des Hauptbremszylinders durch eine von dem Bremsflüssigkeitsbehälter ausgehende separate Ansaugleitung Bremsflüssigkeit und stellt diese unter Druck den Steuerventilen zur Weiterleitung in Radbremszylinder der Radbremsen der hinteren antreibbaren Räder zur Verfügung. Nachteilig ist, daß infolge der Anordnung der Pumpenfeder eine Undichtheit an einem der Radbremszylinder zum Einsaugen von Luft in den Bremskreis führt, und daß gegebenenfalls die Radbremsen dann, wenn infolge von kaltem Wetter der Zustrom von Bremsflüssigkeit wegen deren Zähflüssigkeit aus dem Bremsflüssigkeitsbehälter zur Rückförderpumpe behindert ist, zu weit geöffnet werden. Diese Zweikreisbremsanlage ist nicht geeignet zur Antriebsschlupfregelung an Antriebsrädern, deren Radbremsen auf zwei Bremskreise zu verteilen sind, sowie dies beispielsweise für Fahrzeuge mit antreibbaren Vorderrädern die Regel ist.

In einer Zweikreisbremsanlage gemäß der Druckschrift DE-A-3 832 023 ist ebenfalls nur ein Bremskreis zur Antriebsschlupfregelung eingerichtet, wobei sich die selbstansaugende Rückförderpumpe durch eine relativ enge Hauptbremsleitung und durch im Hauptbremszylinder unvermeidbar befindliche Engstellen, die ebenfalls Strömungswiderstände verursachen, versorgt. Dies führt im Antriebsschlupfregelbetrieb bei kaltem Wetter gegebenenfalls zu nachteiligem Unterdruck im Ansaugbereich der Rückförderpumpe und kann mangelhafte Füllung und mangelhafte Druckerzeugung der Rückförderpumpe zur Folge haben. Dies wirkt sich besonders nachteilig aus, wenn plötzlich über Glatteis hohe Drehmomentüberschüsse an den Antriebsrädern durch Bremsen zu kompensieren sind. Damit dieser Unterdruck nicht zum Einsaugen von Luft durch irgendeine Undichtheit beispielsweiwse in den Radbremszylindern oder/und zu weitem Öffnen von Radbremsen führt, ist zwischen diesen und der Rückförderpumpe ein mit einer vorgespannten Feder belastetes Rückschlagventil eingebaut, das sich erst öffnet, wenn ein Druckgefälle von ca. 1 bar zwischen dessen Eingang und Ausgang vorhanden ist.

Es stellte sich die Aufgabe, eine Zweikreisbremsanlage möglichst preisgünstig weiterzubilden, damit Antriebsschlupfregelung möglich ist an Antriebsrädern, deren Radbremsen an zwei Bremskreise angeschlossen sind.

### Vorteile der Erfindung

Die erfindungsgemäße Zweikreisbremsanlage mit den kennzeichnenden Merkmalen des Anspruchs 1 hat den Vorteil, daß durch Wegfall des dritten Pumpenelements der Rückförderpumpe eine kostengünstige Bremsdruckversorgung für den Antriebsschlupfregel-(ASR-) Betrieb erzielt wird. Das erfindungsgemäße Rückschlagventil zwischen dem selbstansaugend ausgebildeten Pumpenelement der Rückförderpumpe und den mit diesem Pumpenelement verbundenen Auslaßkanälen dient als Druckgefälleventil, das verhindert, daß bei Bremsdruckabbau sowohl im ABS- als auch im ASR-Betrieb das selbstansaugend ausgebildete Pumpenelement durch Ansaugen von Umgebungsluft über undichte Kolbendichtungen etc. Unterdruck in den Radbremszylindern erzeugt. Das Druckgefälle wird so groß gewählt, daß in den Radbremszylindern ein geringfügiger Überdruck gegenüber Atmosphäre verbleibt. Mittels des Druckbegrenzungsventils wird der Bremsversorgungsdruck im ASR-Betrieb auf einen Maximaldruck begrenzt. Überschüssige Bremsflüssigkeit fließt in den Bremsflüssigkeitsbehälter und nicht in den Hauptbremszylinder ab.

Dabei hat die erfindungsgemäße Zweikreisbremsanlage eine diagonale Bremskreisaufteilung erhalten für ASR-Betrieb mittels auf beide Bremskreise verteilten Radbremszylindern von Antriebsrädern.

Durch die in den weiteren Ansprüchen aufgeführten Maßnahmen sind vorteilhafte Weiterbildungen und Verbesserungen der im Anspruch 1 angegebenen Zweikreisbremsanlage möglich.

Reicht die Förderleistung des Pumpenelements zu Beginn der Antriebsschlupfregelung nicht aus, weil beispielsweise das Vierkanal-Hydroaggregat und der Bremsflüssigkeitsbehälter zu weit voneinander entfernt sind, so kann gemäß weiterer Ausführungsformen der Erfindung entweder ein Speicher mit Speicherladeventil und Druckbegrenzungsventil oder eine als Niederdruckpumpe ausgebildete Vorladepumpe mit parallel geschaltetem Druckbegrenzungsventil eingesetzt werden. Der Speicher mit Speicherladeventil wird an der zum Bremsflüssigkeitsbehälter führenden Verbindungsleitung zwischen dem Umschaltventil und dem Druckbegrenzungsventil angeschlossen, während die Vorladepumpe zwischen dem Bremsflüssigkeitsbehälter und dem Ladeventil eingeschaltet wird.

### Zeichnung

Die Erfindung ist anhand von in der Zeichnung dargestellten Ausführungsbeispielen in der nachfolgenden Beschreibung näher erläutert. Es zeigen:
- Fig. 1: ein Blockschaltbild einer Zweikreisbremsanlage mit vorne/hinten-Bremskreisaufteilung, Blockierschutzsystem und Antriebsschlupfregelung für einen Personenkraftwagen,
- Fig. 2 und 3: jeweils eine Zusatzbaugruppe zur Modifizierung der Zweikreisbremsanlage in Fig. 1,
- Fig. 4: ein Blockschaltbild einer Zweikreisbremsanlage mit diagonaler Bremskreisaufteilung, Blockierschutzsystem und Antriebsschlupfregelung für einen Personenkraftwagen.
- Fig. 5: ausschnittweise ein Blockschaltbild eines modifizierten Hydroaggregats in der Zweikreisbremsanlage gemäß Fig. 1 oder Fig. 4.

### Beschreibung des Ausführungsbeispiels

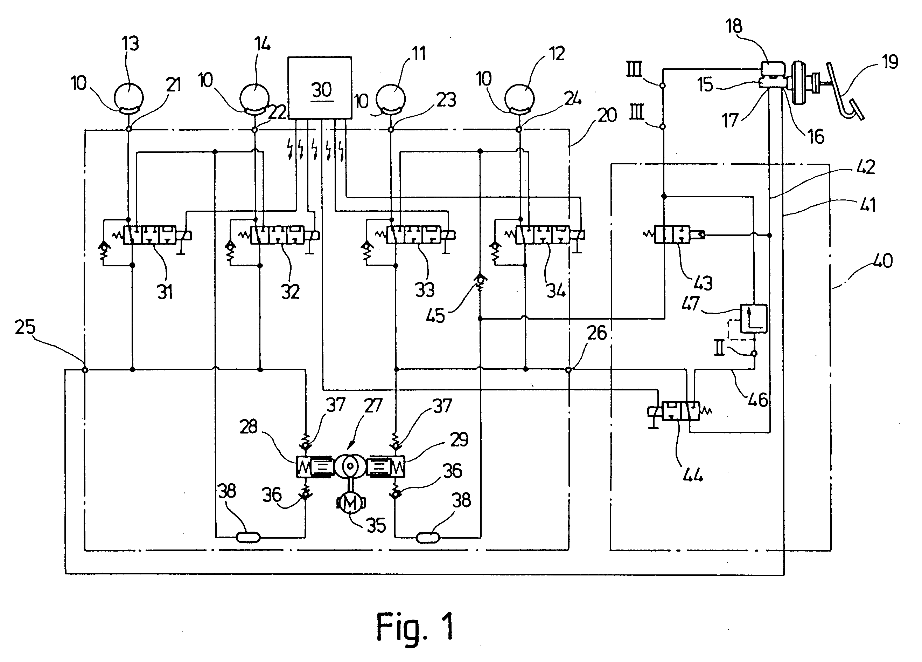

Bei der in Fig. 1 im Blockschaltbild dargestellten hydraulischen Zweikreisbremsanlage mit vorne/hinten- oder Vorderachs/Hinterachs-Bremskreisaufteilung, Blockierschutzsystem (ABS) und Antriebsschlupfregelung (ASR), auch Vortriebsregelung genannt, für einen Personenkraftwagen sind die Radbremszylinder 10 der Antriebsräder 11,12 in dem einen Bremskreis und die Radbremszylinder 10 der nicht angetriebenen Räder 13,14 in dem anderen Bremskreis angeordnet. Im allgemeinen sind dabei die Antriebsräder 11,12 die Hinterräder des Personenkraftwagens. Zu der Zweikreisbremsanlage gehört in an sich bekannter Weise ein Hauptbremszylinder 15, der zwei getrennte Bremskreisausgänge 16,17 zum Anschließen jeweils eines der beiden Bremskreise aufweist und mit einem Bremsflüssigkeitsbehälter 18 in Verbindung steht. Bei Betätigung eines Bremspedals 19 wird ein gleich großer Bremsdruck über die beiden Bremskreisausgänge 16,17 in den Bremskreisen ausgesteuert.

Zu der Zweikreisbremsanlage gehört ferner ein Vierkanal-Hydroaggregat 20, das vier Auslaßkanäle 21 - 24 und zwei Einlaßkanäle 25 und 26 aufweist. An jedem Auslaßkanal 21 - 24 ist ein Radbremszylinder 10 der Räder 11 - 14 angeschlossen. Jedem Auslaßkanal 21 - 24 ist ein als 3/3-Wegemagnetventil mit Federrückstellung ausgebildete Steuerventil 31 - 34 zugeordnet. Die Steuerventile 31 - 34 werden von einer Steuerelektronik 30 gesteuert und bauen einen vom Radschlupf abhängigen Bremsdruck in den zugeordneten Radbremszylindern 10 auf. Eine Rückförderpumpe 27, die Bestandteil des Vierkanal-Hydroaggregats 20 ist, weist zwei Pumpenelemente 28,29 auf, die von einem Elektromotor 35 gemeinsam angetrieben werden. Die Pumpenelemente 28,29 dienen zum Rückfördern von Bremsflüssigkeit aus den Radbremszylindern 10 beim Druckabbau in den Bremsen. Jeweils ein Pumpenelement 28,29 ist in einem Bremskreis wirksam und eingangsseitig jeweils an dem dritten Arbeitsanschluß der beiden dem gleichen Bremskreis zugeordneten Steuerventilen 31,32 bzw. 33,34 und ausgangsseitig an einem Einlaßkanal 25 bzw. 26 des Vierkanal-Hydroaggregats 20 angeschlossen. Vor und nach jedem Pumpenelement 28,29 sind ein Pumpeneinlaßventil 36 und ein Pumpenauslaßventil 37 angeordnet. Den Pumpeneinlaßventilen 36 vorgeschaltete Niederdruck-Speicherkammern 38 lassen einen Druckabbau unabhängig von der Pumpenfördermenge zu und überwinden den Öffnungsdruck der Pumpeneinlaßventile 36. Die Steuerventile 31 - 34 sind eingangsseitig mit ihrem ersten Arbeitsanschluß an je einem Einlaßkanal 25 bzw. 26 und mit ihrem zweiten Arbeitsanschluß an dem zugeordneten Auslaßkanal 21 - 24 angeschlossen. Die Steuerventile 31 - 34 sind in bekannter Weise so ausgebildet, daß in ihrer ersten, nicht erregten Ventilgrundstellung ein ungehinderter Durchgang von den Einlaßkanälen 25,26 zu den Auslaßkanälen 21 - 24 besteht, wodurch der vom Hauptbremszylinder 15 ausgesteuerte Bremsdruck in die Radbremszylinder 10 der Räder 11 - 14 gelangt. In der zweiten Ventilmittelstellung, die durch Erregung der Steuerventile 31 - 34 mit halbem Maximalstrom herbeigeführt wird, ist dieser Durchgang unterbrochen und alle Arbeitsanschlüsse sind abgesperrt, so daß der in den Radbremszylindern 10 aufgebaute Bremsdruck konstant gehalten wird. In der dritten Ventilendstellung, die durch Ventilerregung mit Maximalstrom eingestellt wird, werden die Ausgangskanäle 21 und 22 bzw. 23 und 24 und damit die Radbremszylinder 10 der Räder 11 - 14 über die Niederdruck-Speicherkammern 38 mit dem Eingang der Pumpenelemente 28 bzw. 29 verbunden, so daß zwecks Bremsdruckabbau Bremsflüssigkeit aus den Radbremszylindern 10 abströmen kann. Der Einlaßkanal 25 des Vierkanal-Hydroaggregats 20 ist über eine erste Verbindungsleitung 41 mit dem Bremskreisausgang 16 des Hauptbremszylinders 15 und der Einlaßkanal 26 ist über eine zweite Verbindungsleitung 42 mit dem Bremskreisausgang 17 des Hauptbremszylinders 11 verbunden.

Ein Zusatzhydroaggregat 40 dient zum Erzeugen eines Bremsversorgungsdruck bei Antriebsschlupfregelung (ASR-Betrieb). Es weist ein als hydraulisch gesteuertes 2/2-Wegeventil ausgebildetes Ladeventil 43 und ein elektromagnetisches Umschaltventil 44 auf. Das Ladeventil 43 ist mit seinem einen Ventilanschluß über die eine Speicherkammer 38 und das Pumpeneinlaßventil 36 an dem selbstansaugend ausgebildeten Pumpenelement 29 der Rückförderpumpe 27 und mit dem anderen Ventilanschluß an dem Bremsflüssigkeitsbehälter 18 angeschlossen, während sein hydraulischer Steuereingang an der Verbindungsleitung 42 vom Bremskreisausgang 17 des Hauptbremszylinders 15 zu dem Einlaßkanal 26 des Vierkanal-Hydroaggregats 20, der dem Bremskreis für die Antriebsräder 11,12 zugeordnet ist, liegt. In der Verbindungsleitung zwischen den dritten Anschlüssen der Steuerventile 33,34 und dem Eingang des Pumpenelements 29 ist noch ein Rückschlagventil 45 angeordnet, dessen Durchflußrichtung zum Pumpenelement 29 hin gerichtet ist. Das Rückschlagventil 45 ist in dem Leitungsabschnitt angeordnet, der zwischen den dritten Ventilanschlüssen der Steuerventile 33,34 und der Anschlußstelle des Ladeventils 43 an dem Pumpenelement 29 liegt. Das Ladeventil 43 gibt in seiner ungesteuerten Ventilgrundstellung die Verbindung vom Bremsflüssigkeitsbehälter 18 zum Pumpenelement 29 frei und sperrt diese ab, sobald durch Betätigung des Bremspedals 19 Steuerdruck an seinen Steuereingang gelangt.

Das Umschaltventil 44 ist als 3/2-Wegemagnetventil mit Federrückstellung ausgebildet und in die Verbindungsleitung 42 zwischen dem Einlaßkanal 26 und dem Bremskreisausgang 17 eingeschaltet, wobei der erste Ventilanschluß an dem Einlaßkanal 26, der zweite Ventilanschluß an dem Bremskreisausgang 17 und der dritte Ventilanschluß über eine Verbindungsleitung 46 an dem Bremsflüssigkeitsbehälter 18 angeschlossen ist. In der Verbindungsleitung 46 ist ein Druckbegrenzungsventil 47 angeordnet. Das Umschaltventil 44 ist so ausgebildet, daß der Einlaßkanal 26 des Vierkanal-Hydroaggregats 20 in der Ventilgrundstellung mit dem Bremskreisausgang 17 des Hauptbremszylinders 15 und in seiner Ventilarbeitsstellung mit der Verbindungsleitung 46 und somit über das Druckbegrenzungsventil 47 mit dem Bremsflüssigkeitsbehälter 18 verbunden ist.

Das Umschaltventil 44 wird von der Steuerelektronik 30 gesteuert und dann umgeschaltet, wenn der Steuerelektronik 30 ein Antriebsschlupf mindestens eines der Antriebsräder 11,12 von hier nicht dargestellten Radschlupfsensoren mitgeteilt wird. Die Rückförderpumpe 27 läuft an, und das selbstansaugende Pumpenelement 29 saugt aus dem Bremsflüssigkeitsbehälter 18 über das Ladeventil 43 Bremsflüsigkeit an und erzeugt einen Bremshochdruck, der über die Steuerventile 33,34 in die Radbremszylinder 10 der Antriebsräder 11,12 gelangt. Dreht beispielsweise nur das Antriebsrad 11 durch, so wird das Steuerventil 34 des nicht schlüpfenden Antriebsrads 12 in die Ventilmittelstellung überführt, so daß der Auslaßkanal 24 von dem vom Pumpenelement 29 erzeugten Bremshochdruck abgesperrt ist. Über das andere Steuerventil 33 wird Bremsdruck in dem Radbremszylinder 10 des durchdrehenden Antriebsrads 11 aufgebaut, das damit abgebremst wird. Der erforderliche Bremsdruck wird durch Druckmodulation, die durch Schalten des Steuerventils 33 bewirkt wird, eingestellt. Überschüssige Bremsflüssigkeit wird über das Umschaltventil 44 und das Druckbegrenzungsventil 47 zum Bremsflüsigkeitsbehälter 18 zurückgefördert.

Gegen Ende der Antriebsschlupfregelung, wenn kein Antriebsschlupf mehr sensiert wird, wird von der Steuerelektronik 30 das Steuerventil 33 in seine durch Maximalstromerregung herbeiführbare Ventilendstellung umgeschaltet. Bei dieser Stellung des Steuerventils 33 strömt Bremsflüssigkeit aus dem Radbremszylinder 10 des Antriebsrades 11 über das Rückschlagventil 45 in die Niederdruck-Speicherkammer 38 ab und wird von dem Pumpenelement 29 über das Druckbegrenzungsventil 47 in den Bremsflüssigkeitsbehälters 18 zurückgeführt. Der Bremsdruck wird wieder abgebaut und die Niederdruck-Speicherkammer 38 leergefördert. Anschließend werden das Steuerventil 33 und das Umschaltventil 44 in ihre Ventilgrundstellung zurückgeschaltet. Bei Antriebsschlupf beider Antriebsräder 11,12 werden beide Steuerventile 33,34 zur Bremsdruckmodulation zwischen der Ventilgrundstellung und der Ventilmittelstellung hin- und hergeschaltet.

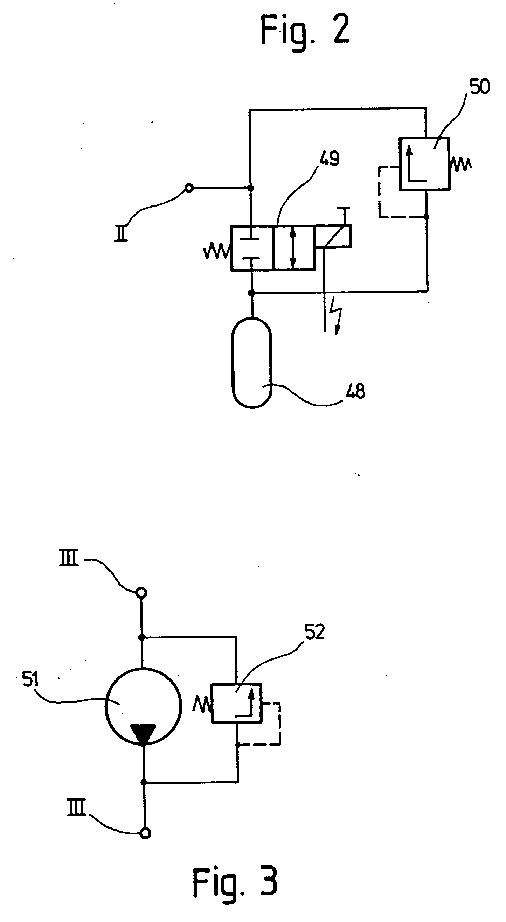

In Fig. 2 ist eine Baugruppe dargestellt, die aus einem Speicher 48, einem Speicherladeventil 49 und einem letzteren parallel geschalteten Druckbegrenzungsventil 50 besteht. Diese Zusatzbaugruppe wird an der Anschlußklemme II in der Verbindungsleitung 46 zwischen Umschaltventil 44 und Bremsflüssigkeitsbehälter 18 angeschlossen, wenn die Förderleistung des Pumpenelements 29 nicht ausreicht, weil z.B. zwischen dem Vierkanal-Hydroaggregat 20 und dem Bremsflüssigkeitsbehälter 18 eine sehr lange Bremsflüssigkeitsleitung erforderlich ist.

Für den gleichen Zweck kann anstelle der in Fig. 2 dargestellten Baugruppe, die in Fig. 3 skizzierte Zusatzbaugruppe aus Vorladepumpe 51 und parallel geschaltetem Druckbegrenzungsventil 52 vorgesehen werden, die nach Auftrennen der Verbindung zwischen den Anschlußklemmen III-III in dem Leitungsabschnitt zwischen Bremsflüssigkeitsbehälter 18 und Ladeventil 43 an diesen Anschlußklemmen III-III anzuschließen ist.

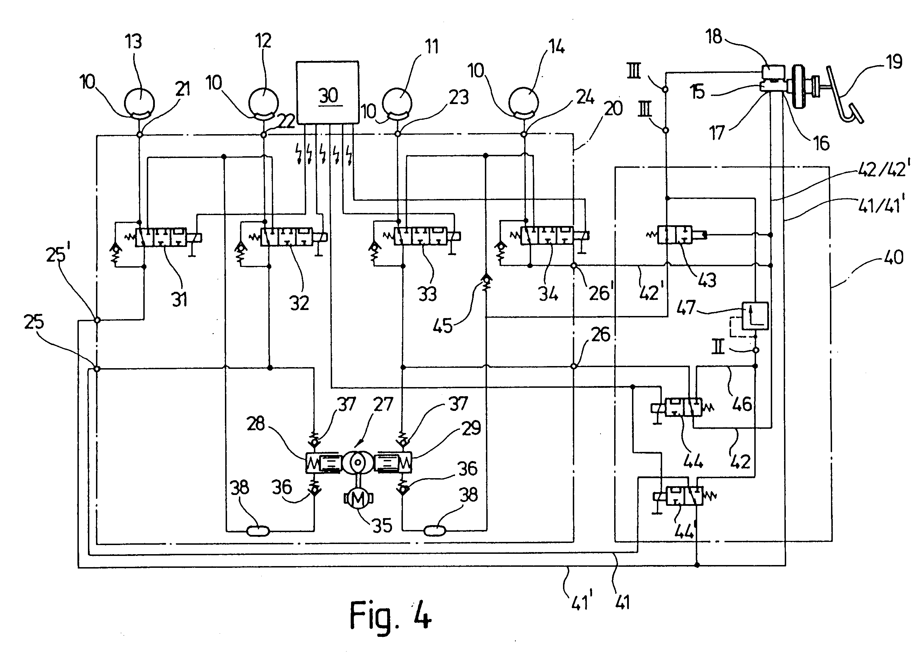

Bei der in Fig. 4 im Blockschaltbild dargestellten hydraulischen Zweikreisbremsanlage mit diagonaler Bremskreisaufteilung, Blockierschutzsystem (ABS) und Antriebsschlupfregelung (ASR) für Personenkraftwagen ist jeweils ein Antriebsrad 11,12 in einem von zwei Bremskreisen angeordnet. Im allgemeinen sind diese Antriebsräder 11,12 die Vorderräder des Personenkraftwagens. Soweit die Zweikreisbremsanlage mit der in Fig. 1 beschriebenen Zweikreisbremsanlage mit vorne/hinten-Bremskreisaufteilung übereinstimmen, sind gleiche Bauelemente mit gleichen Bezugszeichen versehen.

Bei dem Vierkanal-Hydroaggregat 20 sind die beiden Einlaßkanäle 25,26 jeweils in zwei Kanäle 25 und 25' bzw. 26 und 26' aufgetrennt, so daß insgesamt vier Einlaßkanäle vorhanden sind. Mit den Einlaßkanälen 25 und 26 sind nach wie vor die Ausgänge der Pumpenelemente 28 und 29 verbunden. An den Einlaßkanälen 25 und 26 sind weiterhin eingangsseitig die Steuerventile 32 und 33 angeschlossen, die den Antriebsrädern 12,11 in jedem Bremskreis zugeordnet sind. Mit den Einlaßkanälen 25' und 26' sind die Steuerventile 31 und 34, die den nichtangetriebenen Rädern 13,14 zugeordnet sind, eingangsseitig verbunden. Während die Einlaßkanäle 25 und 26 nach wie vor über die Verbindungsleitungen 41 und 42 mit den Bremskreisausgängen 16 und 17 des Hauptbremszylinders 15 verbunden sind, sind die Einlaßkanäle 25' und 26' durch eine dritte und vierte Verbindungsleitung 41' und 42' mit diesen Bremskreisausgängen 16 und 17 verbunden. Das Zusatz-Hydroaggregat 40 weist noch ein zweites Umschaltventil 44' auf, das identisch dem Umschaltventil 44 ausgebildet ist. Dieses Umschaltventil 44' ist in der ersten Verbindungsleitung 41 zwischen dem Bremskreisausgang 16 des Hauptbremszylinders 15 und dem Einlaßkanal 25 des Vierkanal-Hydroaggregats 20 so eingeschaltet, daß sein erster Ventilanschluß an dem Einlaßkanal 25, sein zweiter Ventilanschluß an dem Bremskreisausgang 16 und sein dritter Ventilanschluß an der Verbindungsleitung 46 zwischen dem ersten Umschaltventil 44 und dem Druckbegrenzungsventil 47 liegt.

Das Umschaltventil 44' wird ebenfalls von der Steuerelektronik 30 zugleich mit dem Umschaltventil 44 angesteuert. Beide Umschaltventile 44,44' werden gemeinsam immer dann umgeschaltet, wenn der Steuerelektronik 30 ein Antriebsschlupf mindestens eines der Antriebsräder 11,12 von den Radschlupfsensoren mitgeteilt wird. Das Pumpenelement 29 der anlaufenden Rückförderpumpe 27 saugt Bremsflüssigkeit über das Ladeventil 43 aus dem Bremsflüssigkeitsbehälter 18 an und erzeugt einen Bremshochdruck, der einerseits an dem Steuerventil 33 und andererseits über die umgesteuerten Umschaltventile 44,44' an dem Steuerventil 32 ansteht. Dreht beispielsweise das Antriebsrad 11 durch, so wird das Steuerventil 32, das dem Auslaßkanal 22 für den Radbremszylinder 10 des nichtschlüpfenden Antriebsrades 12 zugeordnet ist, in die Mittelstellung umgesteuert, so daß der Auslaßkanal 22 von dem Bremshochdruck abgesperrt ist. Über das andere Steuerventil 33 wird Bremsdruck im Radbremszylinder 10 des durchdrehenden Antriebsrades 11 aufgebaut, das damit abgebremst wird. Der erforderliche Bremsdruck wird durch Druckmodulation, die durch Schalten des Steuerventils 33 bewirkt wird, eingestellt. Gegen Ende der Antriebsschlupfregelung, wenn kein Antriebsschlupf mehr sensiert wird, wird von der Steuerelektronik 30 das Steuerventil 33 in seine durch Maximalstromerregung herbeiführbare Endstellung umgeschaltet. In dieser Endstellung strömt Bremsflüssigkeit aus dem Radbremszylinder 10 des Antriebsrades 11 über das Rückschlagventil 45 in die Niederdruckspeicherkammer 38 ab und wird von dem Pumpenelement 29 über das Druckbegrenzungsventil 47 in den Bremsflüssigkeitsbehälter 18 zurückgeführt. Der Bremsdruck wird wieder abgebaut und die Niederdruckspeicherkammer 38 leergefördert. Anschließend werden das Steuerventil 33 und die beiden Umschaltventile 44,44' in ihre Ventilgrundstellung zurückgeschaltet. Bei Antriebsschlupf beider Antriebsräder 11,12 werden beide Steuerventile 32,33 zur Bremsdruckmodulation zwischen der Ventilgrundstellung und der Ventilmittelstellung hin- und hergeschaltet.

Die in Fig. 2 und 3 dargestellten Baugruppen, können in gleicher Weise wie zu Fig. 1 beschrieben auch an die Zweikreisbremsanlage gemäß Fig. 4 angeschlossen werden.

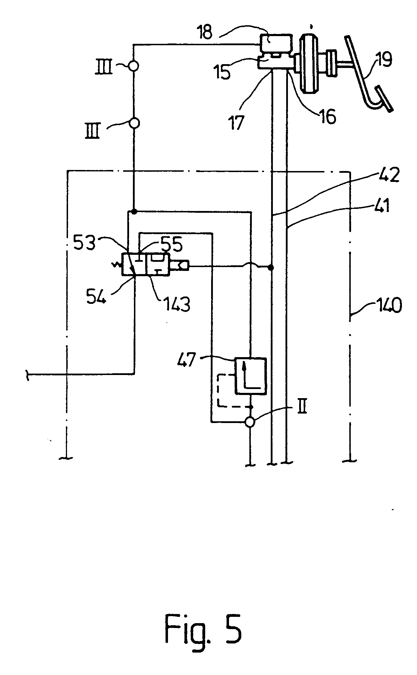

In Fig. 5 ist in Verbindung mit dem Hauptbremszylinder 15 ein modifiziertes Zusatzhydroaggregat 40 ausschnittweise dargestellt, das anstelle des Zusatzhydroaggregats 40 in die Zweikreisbremsanlage gemäß Fig. 1 oder 4 eingesetzt werden kann. Der Ausschnitt erfaßt den Umfang der Modifikation. Die nicht dargestellten Bauelemente entsprechen denen im Zusatzhydroaggregat 40 gemäß Fig. 1 bzw. Fig. 4. Die vorgenommene Modifikation betrifft ausschließlich das Ladeventil 143, das nunmehr als hydraulisch gesteuertes 3/2-Wegeventil ausgebildet ist. Der hydraulische Steuereingang des Ladeventils 143 ist wiederum an dem Bremskreisausgang 17 des Hauptbremszylinders 15 angeschlossen, während von den drei gesteuerten Ventilanschlüssen des Ladeventils 143 der erste Ventilanschluß 53 an dem Bremsflüssigkeitsbehälter 18, der zweite Ventilanschluß 54 an der Verbindungsleitung zum Eingang des als selbstansaugende Hochdruckpumpe ausgebildeten Pumpenelements 29 und der dritte Ventilanschluß 55 an dem Eingang des Druckbegrenzungsventils 47 liegt. Das Ladeventil 143 ist so ausgebildet, daß der erste Ventilanschluß 53 in der ungesteuerten Ventilgrundstellung mit dem zweiten Ventilanschluß 54 und in der umgesteuerten Arbeitsstellung mit dem dritten Ventilanschluß 55 verbunden ist. Auf diese Weise ist während des ASR-Betriebs der Eingang des als selbstansaugende Hochdruckpumpe ausgebildeten Pumpenelements 29 immer mit dem Bremsflüssigkeitsbehälter 18 verbunden. Überschüssige Bremsflüssigkeit wird während des ASR-Betriebs von dem Pumpenelement 29 (Fig. 1) bzw. von den Pumpenelementen 28,29 (Fig. 4) über das umgeschaltete Umschaltventil 44 bzw. die umgeschalteten Umschaltventile 44,44' und das Druckbegrenzungsventil 47 wieder in den Bremsflüssigkeitsbehälter 18 zurückgefördert. Wird während des ASR-Betriebs das Bremspedal 19 betätigt, so wird durch den im Hauptbremszylinder 15 aufgebauten Bremsdruck das Ladeventil 143 umgesteuert, während das Umschaltventil 44 bzw. die beiden Umschaltventile 44,44' noch einige Millisekunden in seiner bzw. ihrer Arbeitsstellung verbleibt bzw. verbleiben. Mit Umschaltung des Ladeventils 143 wird das Druckbegrenzungsventil 47 überbrückt und dadurch die in den Bremskreisen während des ASR-Betriebs vorgespannten Bremsflüssigkeitsvolumina unter Umgehung des Druckbegrenzungsventils 47 sofort in Richtung Bremsflüssigkeitsbehälter 18 entlastet. Damit wird beim Einbremsen während des ASR-Betriebs eine Schnellentspannung erzielt, wodurch die Funktionsbereitschaft des ABS-Betriebs sehr viel schneller eintritt.

Die Erfindung ist nicht auf die beschriebenen Ausführungsbeispiele beschränkt. So kann jedes Steuerventil auch aus einer Kombination zweier 2/2-Wegemagnetventile gebildet werden. Ein 2/2-Wegemagnetventil bildet dabei ein Einlaßventil, das in einer unerregten Grundstellung ungehinderten Durchgang von dem Einlaßkanal zu dem zugeordneten Auslaßkanal ermöglicht und in seiner Arbeitsstellung diesen Durchgang sperrt. Umgekehrt stellt das andere, als sog. Ablaßventil wirkende 2/2-Wegemagnetventil in seiner durch Magneterregung herbeiführbaren Arbeitsstellung eine Verbindung des zugeordneten Auslaßkanals zu dem Eingang des zugeordneten Pumpenelements her und sperrt in seiner unerregten Grundstellung diesen Durchgang. In der sog. Druckhaltestellung nehmen beide 2/2-Wegemagnetventile der Ventilkombination ihre Sperrstellung ein.

## Patentansprüche

1. Hydraulische Zweikreisbremsanlage mit Blockierschutzsystem und Antriebsschlupfregelung für Kraftfahrzeuge, insbesondere Personenkraftwagen, mit einem zwei getrennte Bremskreisausgänge aufweisenden Hauptbremszylinder zum Aussteuern eines Bremsdrucks durch Bremspedalbetätigung, mit einem mit dem Hauptbremszylinder in Verbindung stehenden Bremsflüssigkeitsbehälter, mit einem an den beiden Bremskreisausgängen des Hauptbremszylinders angeschlossenen Vierkanal-Hydroaggregat, das vier Auslaßkanäle zum Anschließen von Radbremszylindern der Fahrzeugräder, jeweils einem Auslaßkanal zugeordnete elektromagnetische Steuerventile zum Aussteuern eines radabschlupfabhängigen Bremsdrucks und eine Rückförderpumpe mit zwei getrennten, in jeweils einem Bremskreis wirksamen Pumpenelementen zum Rückfördern von Bremsflüssigkeit beim Bremsdruckabbau aufweist, die jeweils eingangsseitig durch die Steuerventile mit den einem Bremskreis zugehörigen Auslaßkanälen verbindbar und ausgangsseitig mit dem diesen Bremskreis zugeordneten Bremskreisausgang des Hauptbremszylinders verbunden sind, und mit einem Zusatzhydroaggregat zum Erzeugen eines Bremsversorgungsdrucks bei Antriebsschlupfregelung, das ein hydraulisch gesteuertes Ladeventil, das zumindest bei Antriebsschlupfregelung ein Pumpenelement der Rückförderpumpe, das einem mindestens ein Antriebsrad enthaltenden Bremskreis zugeordnet ist, eingangsseitig mit dem Bremsflüssigkeitsbehälter verbindet, und ein in die Verbindung zwischen diesem Pumpenelement und dem Hauptbremszylinder eingeschaltetes elektromagnetisches Umschaltventil aufweist, das bei Antriebsschlupfregelung dieses Pumpenelement ausgangsseitig von dem Hauptbremszylinder trennt und unter Zwischenschaltung eines Druckbegrenzungsventils mit dem Bremsflüssigkeitsbehälter verbindet, dadurch gekennzeichnet, daß dieses Pumpenelement (29) der Rückförderpumpe (27) als selbstansaugende Hochdruckpumpe ausgebildet ist und daß in der Verbindungsleitung des Eingangs dieses Pumpenelements (29) zu den Steuerventilen (33,34) des dem Pumpenelement (29) zugeordneten Bremskreises ein Rückschlagventil (45) mit zum Pumpeneingang und zum Ladeventil (43) hin weisender Durchflußrichtung eingeschaltet ist und daß das Vierkanal-Hydroaggregat (20) vier Einlaßkanäle (25,25',26,26') aufweist, die über je eine Verbindungsleitung (41,41',42,42') mit den beiden Bremskreisausgängen (16,17) des Hauptbremszylinders (15) verbunden sind, daß die Pumpenelemente (28,29) der Rückförderpumpe (27) ausgangsseitig an diejenigen Einlaßkanälen (25,26) angeschlossen sind, an denen die Steuerventile (32,33) für die Ausgangskanäle (22,23) der Radbremszylinder (10) der Antriebsräder (12,11) liegen, daß das Umschaltventil (44) in der einen Verbindungsleitung (42) von dem einen Bremskreisausgang (17) des Hauptbremszylinders (15) zu einem Einlaßkanal (26) angeordnet ist, der mit einem Pumpenelement (29) verbunden ist, daß ein zweites Umschaltventil (44') in der anderen Verbindungsleitung (41) von dem anderen Bremskreisausgang (16) des Hauptbremszylinders (15) zu einem weiteren Einlaßkanal (25) angeordnet ist, der mit dem anderen Pumpenelement (28) verbunden ist, und daß das zweite Umschaltventil (44') derart ausgebildet ist, daß bei Antriebsschlupfregelung der Einlaßkanal (25) von dem Hauptbremszylinder (15) getrennt ist und an der Verbindungsleitung (46) zwischen dem ersten Umschaltventil (44) und dem Druckbegrenzungsventil (47) angeschlossen ist.

2. Bremsanlage nach Anspruch 1, dadurch gekennzeichnet, daß beide Umschaltventile (44,44') als 3/2-Wegemagnetventile mit Federrückstellung ausgebildet sind, von deren drei Ventilanschlüsse jeweils der erste Ventilanschluß mit dem zugeordneten Einlaßkanal (26 bzw. 25) des Vierkanal-Hydroaggregats (20), der zweite Ventilanschluß mit dem zugeordneten Bremskreisausgang (17 bzw. 16) des Hauptbremszylinders (15) und der dritte Ventilanschluß über das Druckbegrenzungsventil (47) mit dem Bremsflüssigkeitsbehälter (18) verbunden ist, und daß die beiden Umschaltventile (44,44') so ausgebildet sind, daß jeweils der erste Ventilanschluß in der unerregten Ventilgrundstellung mit dem zweiten Ventilanschluß und in der Ventilarbeitsstellung mit dem dritten Ventilanschluß verbunden und der jeweils abgekoppelte dritte bzw. zweite Ventilanschluß abgesperrt ist.

3. Bremsanlage nach einem der Ansprüche 1, 2, dadurch gekennzeichnet, daß an der Verbindung zwischen dem ersten Umschaltventil (44) und dem Druckbegrenzungsventil (47) ein Speicher (48) mit vorgeschaltetem, als 2/2-Wegeventil ausgebildeten Speicherladeventil (49) und mit zu letzterem parallelen weiteren Druckbegrenzungsventil (50) angeschlossen ist.

4. Bremsanlage nach einem der Ansprüche 1 - 3, dadurch gekennzeichnet, daß in Reihe mit dem Ladeventil (43;53) eine als Niederdruckpumpe ausgebildete Vorladepumpe (51) mit parallel geschaltetem Druckbegrenzungsventil (52) angeordnet ist.

5. Bremsanlage nach einem der Ansprüche 1 - 4, dadurch gekennzeichnet, daß als Ladeventil ein hydraulisch gesteuertes 2/2-Wegeventil (43) mit Federrückstellung verwendet wird, dessen hydraulischer Steuereingang mit dem einen Bremskreisausgang (17) des Hauptbremszylinders (15) verbunden ist und das so ausgebildet ist, daß es in seiner ungesteuerten Grundstellung den Eingang des als selbstansaugende Hochdruckpumpe ausgebildeten Pumpenelements (29) der Rückförderpumpe (27) mit dem Bremsflüssigkeitsbehälter (18) verbindet und in seiner umgesteuerten Arbeitsstellung diese Verbindung auftrennt.

6. Bremsanlage nach einem der Ansprüche 1 - 5, dadurch gekennzeichnet, daß als Ladeventil ein hydraulisch gesteuertes 3/2-Wegeventil (143) verwendet wird, dessen hydraulischer Steuereingang mit dem einen Bremskreisausgang (17) des Hauptbremszylinders (15) verbunden ist und das so ausgebildet ist, daß es in seiner ungesteuerten Grundstellung den Eingang des als selbstansaugende Hochdruckpumpe ausgebildeten Pumpenelements (29) der Rückförderpumpe (27) mit dem Bremsflüssigkeitsbehälter (18) verbindet und in seiner umgesteuerten Arbeitsstellung diese Verbindung unterbricht und das Druckbegrenzungsventil (47) überbrückt.

## Claims

1. Hydraulic twin-circuit brake system with an anti-lock protection system and drive-slip control system for motor vehicles, in particular passenger cars, having a main brake cylinder with two separate brake circuit outlets for controlling a brake pressure by brake pedal actuation, having a brake fluid container in connection with the main brake cylinder, having a four-passage hydraulic unit connected to the two brake circuit outlets of the main brake cylinder, which hydraulic unit has four outlet passages for connecting to wheel brake cylinders of the vehicle wheels, electromagnet control valves respectively associated with one outlet passage for controlling a brake pressure dependent on wheel slip and a return pump with two separate pump elements respectively effective in one brake circuit for pumping back brake fluid in the case of brake pressure reduction, which pump elements can be respectively connected at the inlet end by means of the control valves to the outlet passages associated with one brake circuit and are connected at the outlet end to the brake circuit outlet, of the main brake cylinder, associated with this brake circuit, and having an additional hydraulic unit for generating a brake supply pressure in the case of drive-slip control, which additional hydraulic unit has a hydraulically controlled charging valve which, at least during drive-slip control, connects a pump element of the return pump which is associated with a brake circuit containing at least one driving wheel to the brake fluid container at the inlet end, and has an electromagnetic switch-over valve connected into the connection between this pump element and the main brake cylinder, which switch-over valve separates this pump element at the outlet end from the main brake cylinder during drive-slip control and connects it to the brake fluid container, a pressure limiting valve being fitted between them, characterized in that this pump element (29) of the return pump (27) is configured as a self-priming high-pressure pump and in that a non-return valve (45) with a flow direction towards the pump inlet and towards the charging valve (43) is connected into the connecting conduit from the inlet of this pump element (29) to the control valves (33, 34) of the brake circuit associated with the pump element (29), in that the four-channel hydraulic unit (20) has four inlet passages (25, 25', 26, 26') which are each connected by means of one connecting conduit (41, 41', 42, 42') to the two brake circuit outlets (16, 17) of the main brake cylinder (15), in that the pump elements (28, 29) of the return pump (27) are connected at the outlet end to the inlet passages (25, 26) on which the control valves (32, 33) for the outlet passages (22, 23) of the wheel brake cylinders (10) of the driving wheels (12, 11) are located, in that the switch-over valve (44) is arranged in one connecting conduit (42) from one brake circuit outlet (17) of the main brake cylinder (15) to an inlet passage (26) which is connected to a pump element (29), in that a second switch-over valve (44') is arranged in the other connecting conduit (41) from the other brake circuit outlet (16) of the main brake cylinder (15) to a further inlet passage (25) which is connected to the other pump element (28) and in that the second switch-over valve (44') is configured in such a way that in the case of drive-slip control, the inlet passage (25) is separated from the main brake cylinder (15) and is connected to the connecting conduit (46) between the first switch-over valve (44) and the pressure limiting valve (47).

2. Brake system according to Claim 1, characterized in that both switch-over valves (44, 44') are configured as 3/2-way magnetic valves, with spring reset, of whose three valve connections the first valve connection is connected to the associated inlet passage (26 or 25) of the four-channel hydraulic unit (20) in each case, the second valve connection is connected to the associated brake circuit outlet (17 or 16) of the main brake cylinder (15) in each case and the third valve connection is connected via the pressure limiting valve (47) to the brake fluid container (18) in each case, and in that the two switch-over valves (44, 44') are configured in such a way that the first valve connection is connected in each case to the second valve connection in the unexcited basic position of the valve and is connected to the third valve connection in the valve working position and the respectively disconnected third or second valve connection is shut off.

3. Brake system according to one of Claims 1 and 2, characterized in that a reservoir (48) is connected to the connection between the first switch-over valve (44) and the pressure limiting valve (47), this reservoir (48) having connected upstream of it a reservoir charging valve (49) configured as a 2/2-way valve and a further pressure limiting valve (50) parallel to the latter.

4. Brake system according to one of Claims 1 to 3, characterized in that a boost pump (51), configured as a low-pressure pump and having a pressure limiting valve (52) connected in parallel with it, is arranged in series with the charging valve (43; 53).

5. Brake system according to one of Claims 1 to 4, characterized in that a hydraulically controlled 2/2-way valve (43) with spring reset is used as the boost valve, the hydraulic control input of which 2/2-way valve (43) is connected to one brake circuit outlet (17) of the main brake cylinder (15) and which 2/2-way valve (43) is configured in such a way that in its uncontrolled basic position, it connects the inlet of the pump element (29), which is configured as a self-priming high-pressure pump, of the return pump (27) to the brake fluid container (18) and separates this connection in its switched-over working position.

6. Brake system according to one of Claims 1 to 5, characterized in that a hydraulically controlled 3/2-way valve (143) is used as the boost valve, the hydraulic control inlet of which 3/2-way valve (143) is connected to one brake circuit outlet (17) of the main brake cylinder (15) and which 3/2-way valve (143) is configured in such a way that in its uncontrolled basic position it connects the inlet of the pump element (29), which is configured as a self-priming high-pressure pump, of the return pump (27) to the brake fluid container (18) and in its uncontrolled working position, interrupts this connection and bypasses the pressure limiting valve (47).

## Revendications

1. Installation de freinage hydraulique à deux circuits comprenant un système de protection antiblocage et un système de régulation de patinage pour un véhicule automobile notamment un véhicule de tourisme, comportant un maître-cylindre ayant deux sorties de circuit de frein, distinctes, pour commander la pression de frein par l'actionnement de la pédale de frein, un réservoir à liquide de frein relié au maître-cylindre, un ensemble hydraulique à quatre canaux reliés aux deux sorties de circuit de frein du maître-cylindre, cet ensemble comportant quatre canaux de sortie pour le branchement des cylindres de frein des roues du véhicule avec, associées à chaque canal de sortie, des soupapes de commande électromagnétiques pour commander une pression de frein dépendant du patinage de la roue et une pompe de refoulement avec deux éléments de pompe, distincts, agissant chaque fois dans un circuit de frein, pour refouler du liquide de frein lors de la diminution de la pression de frein, et qui sont reliés chaque fois en entrée par les soupapes de commande aux canaux de sortie du circuit de frein associé, et en sortie avec la sortie de circuit de frein associée à ce circuit de frein sur le maître-cylindre, et un ensemble hydraulique complémentaire pour créer une pression d'alimentation de frein pour la régulation antipatinage, qui relie au moins pour la régulation antipatinage, en entrée un élément de pompe de la pompe de refoulement, au réservoir à liquide de frein, élément qui est associé à un circuit de frein comprenant au moins une roue motrice et une soupape d'inversion prévue dans la liaison entre cet élément de pompe et la soupape d'inversion électromagnétique du maître-cylindre, et qui pour la régulation antipatinage, sépare la sortie de cet élément de pompe par rapport au maître-cylindre et par interposition d'une soupape de limitation de pression reliée au réservoir à liquide de frein, installation caractérisée en ce que cet élément de pompe (29) de la pompe de refoulement (27) est une pompe haute pression auto-amorçante, et en ce que dans la conduite de liaison de l'entrée de cet élément de pompe (29) vers les soupapes de commande (33, 34) du circuit de frein associé à cet élément de pompe (29), il y a une soupape d'arrêt (45) branchée avec un sens passant allant vers l'entrée de pompe et la soupape de charge (43) et l'ensemble hydraulique à quatre canaux (20) comporte quatre canaux d'entrée (25, 25', 26, 26') reliés chacun par une conduite de liaison (41, 41', 42, 42') avec les deux sorties de circuit de frein (16, 17) du maître-cylindre (15), les éléments de pompe (28, 29) de la pompe de refoulement (27) étant reliés en sortie à ceux des canaux d'entrée (25, 26) auxquels sont reliées les soupapes de commande (32, 33) des canaux de sortie (22, 23) des cylindres de frein (10) des roues motrices (12, 11), la soupape d'inversion (44) étant prévue dans une ligne de liaison (42) à laquelle est associée une sortie de circuit de frein (17) du maître-cylindre (15) vers un canal d'entrée (26) relié à un élément de pompe (29), une seconde soupape d'inversion (44') prévue dans l'autre conduite de liaison (41) allant de l'autre sortie de circuit de frein (16) du maître-cylindre (15) vers un autre canal d'entrée (25), qui est relié à l'autre élément de pompe (28) et en ce que la seconde soupape d'inversion (44') est réalisée pour que lors de la régulation antipatinage, le canal d'entrée (25) soit séparé du maître-cylindre (15) et soit raccordé à la ligne de liaison (46) reliant la première soupape d'inversion (44) et la soupape de limitation de pression (47).

2. Installation de freinage selon la revendication 1, caractérisée en ce que les deux soupapes d'inversion (44, 44') sont des soupapes électromagnétiques à 3/2 voies avec ressort de rappel, avec trois branchements, le premier branchement étant relié au canal d'entrée correspondant (26, 25) de l'ensemble hydraulique à quatre canaux (20), le second branchement étant relié à la sortie de circuit de frein correspondante (17, 16) du maître-cylindre (15) et le troisième branchement étant relié par la soupape de limitation de pression (17) au réservoir à liquide de frein (18) et en ce que les deux soupapes d'inversion (44, 44') sont réalisées pour que chaque fois le premier branchement, en position de base, non excité de la soupape, soit relié au second branchement et qu'en position de travail de la soupape il soit relié au troisième branchement, et que le troisième ou second branchement de soupape, découplé, soit coupé.

3. Installation de freinage selon l'une des revendications 1 et 2, caractérisée en ce qu'à la liaison entre la première soupape de renvoi (44) et la soupape de limitation de pression (47) est relié un accumulateur (48) avec en amont une soupape de charge d'accumulateur (49) en forme de distributeur à 2/2 voies et en parallèle à celui-ci, une autre soupape de limitation de pression (50).

4. Installation de freinage selon l'une des revendications 1 à 3, caractérisée en ce qu'en série avec la soupape de charge (43, 53) on a une pompe intermédiaire (51) en forme de pompe basse pression, avec une soupape de limitation de pression (52) branchée en parallèle.

5. Installation de freinage selon l'une des revendications 1-4, caractérisée en ce que la soupape de charge est un distributeur à 2/2 voies à commande hydraulique (43) avec rappel par ressort, dont l'entrée de commande hydraulique est reliée à une sortie de circuit de frein (17) du maître-cylindre (15), en étant conçue pour que dans sa position de base non commandée, l'entrée de l'élément de pompe (29) en forme de pompe à haute pression auto-amorçante de la pompe de refoulement (27) soit reliée au réservoir à liquide de frein (18) et coupe cette liaison lorsqu'il est en position de travail, commutée.

6. Installation de freinage selon l'une des revendications 1-5, caractérisée en ce que la soupape de charge est un distributeur à tiroirs à 3/2 voies (143), à commande hydraulique, dont l'entrée de commande hydraulique est reliée à une sortie de circuit de frein (17) du maître-cylindre (15) en étant conçue pour qu'en position de base non commandée, l'entrée de l'élément de pompe (29) en forme de pompe à haute pression auto-amorçante de la pompe de refoulement (27) soit reliée au réservoir à liquide de frein (18) et que dans sa position de travail commutée, cette liaison soit coupée et que la soupape de limitation de pression (47) soit court-circuitée.
